# EUROPÄISCHE PATENTSCHRIFT

(11) **EP 1 038 569 B1**
(45) Veröffentlichungstag und Bekanntmachung des Hinweises auf die Patenterteilung: **11.08.2004**
(21) Anmeldenummer: 00100791.3
(22) Anmeldetag: 15.01.2000
(51) Int. Cl.: B01D 53/94, F01P 3/20, F01N 3/20, F17C 11/00

(54) **Konverter für eine Vorrichtung zum Zuführen von Ammoniak in den Abgasstrom eines Verbrennungsmotors sowie Verfahren zum Befüllen eines solchen Konverters**
Converter for a device for adding ammonia to the exhaust flow of an internal combustion engine and process for filling such a converter
Un converteur pour un dispositif d' alimentation de l'ammoniac dans un courant de gaz d'échappement d' un moteur à combustion ainsi que procédé pour remplir un tel converteur

(30) Priorität: 19.03.1999 DE 19912374
(43) Veröffentlichungstag der Anmeldung: 27.09.2000
(73) Patentinhaber: HJS Fahrzeugtechnik GmbH & Co. KG, 58706 Menden (DE)
(72) Erfinder: Hüthwohl, Georg, Dr.-Ing., 59494 Soest (DE); Maurer, Bernd, Dr., 58802 Balve (DE)
(74) Vertreter: Schröter & Haverkamp

(56) Entgegenhaltungen:
- DE-C- 19 720 209
- US-A- 5 809 775

## Beschreibung

Die Erfindung bezieht sich auf das Gebiet der Verminderung von bei Verbrennungsmotoren entstehenden Primärschadstoffen mittels eines Katalysators. Im Rahmen eines solchen primärschadstoffmindernden Systems betrifft die Erfindung insbesondere einen Konverter für eine Vorrichtung zum Zuführen von Ammoniak (NH₃) in den Abgasstrom eines Verbrennungsmotors bestehend aus einem druckfesten Reaktionsbehälter zum Erzeugen von NH₃ durch Erwärmen eines unter Wärmezufuhr NH₃abspaltenden Stoffes und einer Heizeinrichtung zum Erwärmen des Reaktionsbehälters auf Betriebstemperatur zum Erzeugen des NH₃. Ferner betrifft die Erfindung ein Verfahren zum Befüllen eines solchen auf Betriebstemperatur befindlichen Konverters mit neuem, unverbrauchtem NH₃-abspaltendem Stoff.

Neben Kohlenmonoxid (CO) und Kohlenwasserstoffen (HC) gehören insbesondere die Stickoxide (NOₓ) zu den umweltgefährdenden direkt emittierten Primärschadstoffen, die beim Betrieb von Verbrennungsmotoren, insbesondere Dieselmotoren, entstehen. Ein Einsatz von Dreiwegekatalysatoren, wie sie bei Ottomotoren und Gasmotoren verwendet werden, sind aufgrund eines Sauerstoffüberschusses im dieselmotorischen Abgas nicht einsetzbar. Aus diesem Grunde wurde zur Reduktion der Stickoxidemission bei Dieselmotoren ein selektiv arbeitender SCR-Katalysator (Selektive Catalytic Reduction-Katalysator) entwickelt, in dem mit einem zugeführten Reduktionsmittel, nämlich Ammoniak (NH₃) die ausgestoßenen Stickoxide zu N₂ und H₂O reduziert werden.

Eine gattungsgemäße Vorrichtung zum Zuführen von Ammoniak in den Abgasstrom eines Verbrennungsmotores eines Kraftfahrzeuges ist aus der DE 197 20 209 C1 der Anmelderin bekannt. Eine solche Entstikkungseinrichtung umfaßt einen Konverter, in dem sich ein thermolytisch NH₃-abspaltender Stoff oder ein thermolytisch NH₃-abspaltendes Stoffgemisch befindet. Als Stoff kann beispielsweise Ammoniumcarbamat vorgesehen sein. Der Konverter ist über eine Zuführleitung mit dem Abgasstrang eines Dieselmotors verbunden, wobei die Zuführleitung in den Abgasstrang vor der Eingangsseite eines SCR-Katalysators mündet. Als Dosiervorrichtung ist ein Taktventil vorgesehen, welches durch eine Steuereinheit angesteuert ist, so daß in Abhängigkeit bestimmter Motorbetriebskenndaten die benötigte NH₃-Menge in den Abgasstrom eingedüst werden kann. Der Konverter besteht im wesentlichen aus einem druckfesten Reaktionsbehälter, der von einer als Wärmeschlange ausgebildeten Heizeinrichtung umgeben ist. Die Heizeinrichtung ist über eine Zuleitung und eine Ableitung in den Kühlwasserkreislauf des Dieselmotors eingebunden.

Durch Aufheizen des beispielsweise als NH₃-abspaltender Stoff eingesetzten Ammoniumcarbamats zersetzt sich dieses in NH₃ und CO₂. Dieses Gasgemisch sammelt sich in dem druckfesten Reaktionsbehälter bis zum Aufbau eines entsprechenden Innendruckes an. Bei Erreichen eines bestimmten Innendruckes in dem Reaktionsbehälter stellt sich ein Gleichgewichtszustand ein, so daß weiteres Ammoniumcarbamat nicht zersetzt wird. Unter Betriebsbedingungen des Motors, bei dem das die Heizeinrichtung durchströmende Kühlwasser in der Regel eine Temperatur zwischen 80 und 100°C aufweist, ist in dem Reaktionsbehälter ein dem Gleichgewichtszustand entsprechender Druck, der bei Ammoniumcarbamat bei etwa 8 bar liegt. Damit eine ausreichende NH₃-Menge zum Eindüsen in Abgasstrom durch den Konverter bereitgestellt werden kann, muß dieser eine bestimmte Mindestmenge an NH₃-abspaltendem Stoff bzw. daraus abgespaltenem NH₃ bevorraten. Aus diesem Grunde kann die Vorrichtung nicht solange betrieben werden, bis der gesamte NH₃-abspaltende Stoff vergast ist und sich auf diese Weise der Innendruck in dem Reaktionsbehälter abgebaut hat. Ein Öffnen des Reaktionsbehälters in diesem Zustand zum Nachfüllen von neuem, unverbrauchtem thermolytisch NH₃-abspaltendem Stoff kann aufgrund des Innendruckes nicht ohne weiteres erfolgen. Selbst wenn abgewartet werden würde, bis sich der Konverter wieder auf Umgebungstemperaturen abgekühlt hat und dadurch auch der Innendruck gesenkt worden ist, um den Reaktionsbehälter zu öffnen, verbleibt ein gewisser Restdruck insbesondere dann im Konverter, wenn die Umgebungstemperaturen, wie beispielsweise im Sommer relativ hoch sind. Überdies nimmt eine solche Abkühlung zu viel Zeit in Anspruch und kann nicht im Zuge einer normalen Betankung des Kraftfahrzeugs vorgenommen werden.

Ausgehend von diesem diskutierten Stand der Technik liegt der Erfindung daher zum einen die Aufgabe zugrunde, einen gattungsgemäßen Konverter für eine Vorrichtung zum Zuführen von Ammoniak in den Abgasstrom eines Verbrennungsmotors dergestalt weiterzubilden, daß dieser auch bei seinen normalen Betriebstemperaturen ohne weiteres und im Zeitrahmen einer normalen Kraftfahrzeugbetankung mit neuem NH₃abspaltendem Stoff befüllt werden kann.

Ferner liegt der Erfindung die Aufgabe zugrunde, ein Verfahren zum Befüllen eines solchen, auf Betriebstemperatur befindlichen Konverters mit neuem, unverbrauchtem NH₃-abspaltenen Stoff bereitzustellen.

Die erstgenannte Aufgabe wird erfindungsgemäß dadurch gelöst, daß der Reaktionsbehälter einen mit Anschlußmitteln versehenen Auslaß und einen von dem Auslaß beabstandeten, ebenfalls mit Anschlußmitteln versehenen Einlaß aufweist, mit welchen Anschlußmitteln das Innere des Reaktionsbehälters zum Abziehen eines in dem Reaktionsbehälter befindlichen Trägermediums und zum Befüllen des Reaktionsbehälters mit neuem, durch das Trägermedium transportierten NH₃-abspaltendem Stoff an eine Befüllungs- und Entnahmeeinrichtung anschließbar ist.

Die zweitgenannte Aufgabe wird erfindungsgemäß durch ein Verfahren zum Befüllen eines auf Betriebstemperatur befindlichen, einen NH₃abspaltenden Stoff enthaltenden Konverters für eine Vorrichtung zum Zuführen von NH₃ in den Abgasstrom eines Verbrennungmotors bestehend aus einem druckfesten, den NH₃-abspaltenden Stoff enthaltenden Reaktionsbehälter, einer Heizeinrichtung zum Erwärmen des Reaktionsbehälters auf Betriebstemperatur und Mitteln zum Zuführen des abgespaltenen NH₃ in den Abgasstrom des Verbrennungsmotors gelöst, umfassend folgende Schritte:
- Anschließen des Reaktionsbehälters an eine Befüllungs- und Entnahmeeinrichtung, wobei das Innere des Reaktionsbehälters über einen Einlaß mit der Befüllungseinrichtung und über einen Auslaß mit der Entnahmeeinrichtung in Verbindung gebracht wird,
- Befüllen des Reaktionsbehälters mit neuem NH₃-abspaltendem Stoff unter Einsatz eines flüssigen oder gasförmigen, den NH₃-abspaltenden Stoff transportierenden, das von dem NH₃-abspaltenden Stoff abgespaltene NH₃ weder lösenden noch chemisch bindenden Trägermediums, das durch den Einlaß in den Reaktionsbehälter bei gleichzeitigem Abziehen einer Trägermediummenge durch den Auslaß nach einem Abtrennen des NH₃-abspaltenden Stoffes von der abzuziehenden Trägermediummenge eingebracht wird, und
- Trennen des Reaktionsbehälters nach einem Befüllen des Reaktionsbehälters von der Befüllungs- und Entnahmeeinrichtung.

Bei dem erfindungsgemäßen Konverter ist vorgesehen, den Reaktionsbehälter mit einem Einlaß und mit einem Auslaß auszubilden, wobei der Auslaß zweckmäßigerweise im Bereich des Tiefsten des Reaktionsbehälters angeordnet ist. Sowohl der Einlaß als auch der Auslaß sind mit Anschlußmitteln versehen, die ein Anschluß des Einlasses und des Auslasses an eine Befüllungs- und Entnahmeeinrichtung erlauben. Die Befüllungs- und Entnahmeeinrichtung ist zweckmäßigerweise ortsfest - wie die Zapfsäule einer Tankstelle - angeordnet. Ein auf diese Weise an eine Befüllungs- und Entnahmeeinrichtung anschließbarer Konverter erlaubt den Einsatz eines Trägermediums zum Befüllen des Konverters mit neuem, unverbrauchtem NH₃-abspaltendem Stoff, wobei dieser Stoff durch das Trägermedium über den Einlaß in den Reaktionsbehälter eingebracht wird. Gleichzeitig mit dem Einbringen des neuen Stoffes wird aus dem Auslaß Trägermedium abgezogen, welches vor seinem Abzug aus dem Auslaß von dem von dem Trägermedium mitgeführten NH₃-abspaltenden Stoff abgetrennt worden ist.

Durch die Möglichkeit des Anschließens des Reaktionsbehälters an eine Befüllungs- und Entnahmeeinrichtung kann durch Einbringen eines Trägermediums in den Reaktionsbehälter dieser mit neuem NH₃abspaltendem Stoff befüllt werden, ohne daß es dazu grundsätzlich eines vorangegangenen Druckabbaus bedarf. Das Befüllen des Reaktionsbehälters kann somit im wesentlichen auch unter Beibehaltung des in dem Reaktionsbehälters befindlichen Innendruckes durchgeführt werden.

Bei einem solchen Konverter besteht ferner die Möglichkeit, daß dieser in einen Kühlmittelkreislauf eingebunden werden kann, bei dem über den Einlaß Kühlmittel in den Reaktionsbehälter eingebracht und nach Durchströmen des Reaktionsbehälters aus dem Auslaß erwärmt wieder abgezogen werden kann. Dieser Kreislauf kann durch die Befüllungs- und Entnahmeeinrichtung gebildet sein, so daß nach ausreichendem Abkühlen des Reaktionsbehälters mit dem Trägermedium neuer NH₃-abspaltender Stoff in den Reaktionsbehälter eingebracht werden kann. Dabei ist es zweckmäßig, daß das Kühlmittel und das Trägermedium identisch sind. Auch bei dieser Art des Neubefüllens des Konverters braucht der Reaktionsbehälter nicht geöffnet zu werden.

In einer vorteilhaften Ausgestaltung ist vorgesehen, daß das Kühlmittel und das Trägermedium eine identische Flüssigkeit, beispielsweise ein Öl sind. Der Einsatz eines flüssigen Kühlmittels ist zweckmäßig, da durch die höhere Wärmekapazität einer Flüssigkeit gegenüber einem Gas eine raschere Reaktionsbehälterabkühlung erzielbar ist.

Bei Vorsehen eines flüssigen Trägermediums - einer Trägerflüssigkeit - ist vorgesehen, daß in dem Reaktionsbehälter nach einer Befüllung mit neuem NH₃-abspaltendem Stoff eine bestimmte Trägerflüssigkeitsmenge in dem Reaktionsbehälter verbleibt. Eine Erwärmung des NH₃-abspaltenden Stoffes, welches sich innerhalb der Trägerflüssigkeit, beispielsweise in Form kleiner Kügelchen oder auch als Suspension befindet, erfolgt sehr viel rascher und sehr viel gleichmäßiger, da die Erwärmung des Inneren des Reaktionsbehälters nicht durch Wärmestrahlung sondern im wesentlichen durch Wärmeleitung erfolgt.

Ist vorgesehen, den Reaktionsbehälter ohne vorhergehende Kühlung und einen damit einhergehenden Druckabbau neu befüllen zu wollen, sind die Anschlußmittel des Einlasses bzw. des Auslasses mit entsprechenden Zusatzmitteln ausgerüstet. Derartige Zusatzmittel können beispielsweise für den Einlaß ein Einwegeventil und für den Auslaß ein Druckreduzierventil sein, dessen Hochdruckseite zum Reaktionsbehälter weisend angeordnet ist.

Bei Einsatz einer Flüssigkeit als Trägermedium erfolgt eine Trennung des NH₃-abspaltenden Stoffes von der Trägerflüssigkeit beispielsweise durch Vorschalten eines Siebes vor den Auslaß. Der NH₃-abspaltende Stoff, beispielsweise Ammoniumcarbamat wird in Form kleiner Kügelchen oder Pellets mit der Trägerflüssigkeit, beispielsweise einem Öl in den Reaktionsbehälter eingespült und verbleibt mit einem vorbestimmten Flüssigkeitsstand in dem Reaktionsbehälter. Dabei kann vorgesehen sein, daß zwischen dem vorgesehenen Flüssigkeitsstand der Trägerflüssigkeit mit dem NH₃-abspaltenden Stoff und einem darüber befindlichen Reaktionsbehälterbereich, in dem sich das thermolytisch abgespaltene Reaktionsgas, nämlich NH₃ oder ein NH₃-Gasgemisch ansammelt, eine NH₃durchlässige Membran angeordnet ist. Eine solche Unterteilung hat zudem den Vorteil, daß die Membran zusätzlich nach Art eines Schwallbleches wirkt, so daß die in dem Reaktionsbehälters befindliche Flüssigkeit quasi ortsfest im Reaktionsbehälter gehalten ist.

Als Trägermedium können solche gasförmigen oder auch flüssigen Stoffe oder Stoffgemische vorgesehen sein, die das abgespaltene NH₃ nicht lösen oder auf andere Weise chemisch binden. Ferner sollte das eingesetzte Trägermedium auch den NH₃-abspaltenden Stoff nicht lösen können. Vorgesehen sein kann dagegen, daß das Trägermedium die weiteren, bei der thermolytischen NH₃-Abspaltung entstehenden Stoffe oder Stoffgemische bindet. Auf diese Weise kann ausgangsseitig am Konverter reines NH₃ zum Zuführen in den Abgasstrom des Verbrennungsmotors abgezogen werden.

Weitere Vorteile der Erfindung sind Bestandteil der weiteren Unteransprüche sowie der nachfolgenden Beschreibung eines Ausführungsbeispieles unter Bezugnahme auf die beigefügten Figuren. Es zeigen:
- **Fig. 1:**: eine schematisierte Schnittdarstellung eines Konverters für eine Vorrichtung zum Zuführen von NH₃ in den Abgasstrom eines Verbrennungsmotors und
- **Fig. 2:**: der Konverter der Figur 1 angeschlossen an eine Befüllungsund Entnahmeeinrichtung.

Ein Konverter 1 einer nicht näher dargestellten Entstickungseinrichtung zum Entsticken von Abgasen eines Dieselmotors umfaßt einen druckfesten Reaktionsbehälter 2, der einen Einlaß 3 zum Einbringen einer mit neuem, unverbrauchtem NH₃-abspaltendem Stoff versetzten Trägerflüssigkeit, einem Auslaß 4 zum Abziehen der Trägerflüssigkeit und einen weiteren Auslaß 5 zum Abziehen von von dem NH₃-abspaltenden Stoff, beispielsweise Ammoniumcarbamat unter Wärmeeinfluß abgespaltenem NH₃. Der Auslaß 4 befindet sich im Bereich des Tiefsten des Reaktionsbehälters 2, damit durch den Auslaß 4 im wesentlichen der gesamte Reaktionsbehälter 2 entleert werden kann. Der Einlaß 3 ist von dem Auslaß 4 beabstandet und dergestalt angeordnet, daß ein Einbringen des Trägermediums eine turbulente Strömung im Reaktionsbehälter 2 zufolge hat. Der Reaktionsbehälter 2 ist durch eine Membran 6 in einen Eduktbereich 7 und einen Produktbereich 8 unterteilt. Die Membran 6 ist für die beim Zersetzen des NH₃-abspaltenden Stoffes entstehenden Gasphasen durchlässig, so daß sich diese nach ihrer Abspaltung im Produktbereich 8 des Reaktionsbehälters 2 ansammeln. Teil dieses Produktgasgemisches ist NH₃. Ein Druckreduzierventil 9 ist am Auslaß 5 des Reaktionsbehälters 2 angeordnet.

Dem Konverter 1 ist ferner eine Heizeinrichtung 10 zugeordnet, die bei dem in den Figuren dargestellten Ausführungsbeispiel durch eine Wärmeschlange 11 gebildet ist. Die Wärmeschlange 11 ist in nicht näher dargestellter Art und Weise an den kleinen Kühlwasserkreislauf des Dieselmotors angeschlossen und wird somit bei Aufnahme des Betriebes des Dieselmotors rasch erwärmt.

Dem Auslaß 4 ist ein Siebkörper 12 vorgeschaltet, so daß bei Abziehen von Trägerflüssigkeit aus dem Reaktionsbehälter 2 noch im Eduktbereich 7 vorhandener NH₃-abspaltender Stoff nicht mit abgezogen wird.

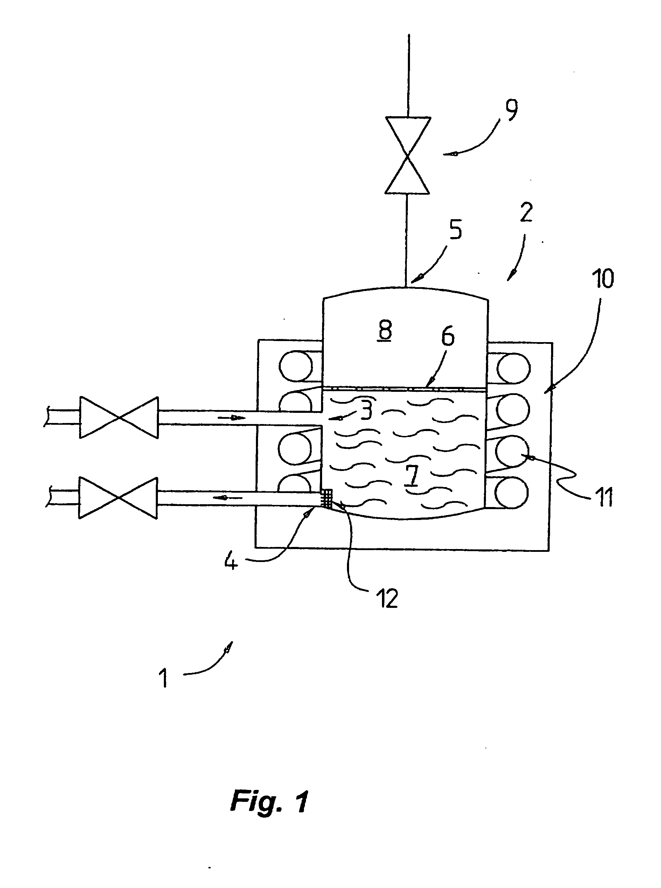

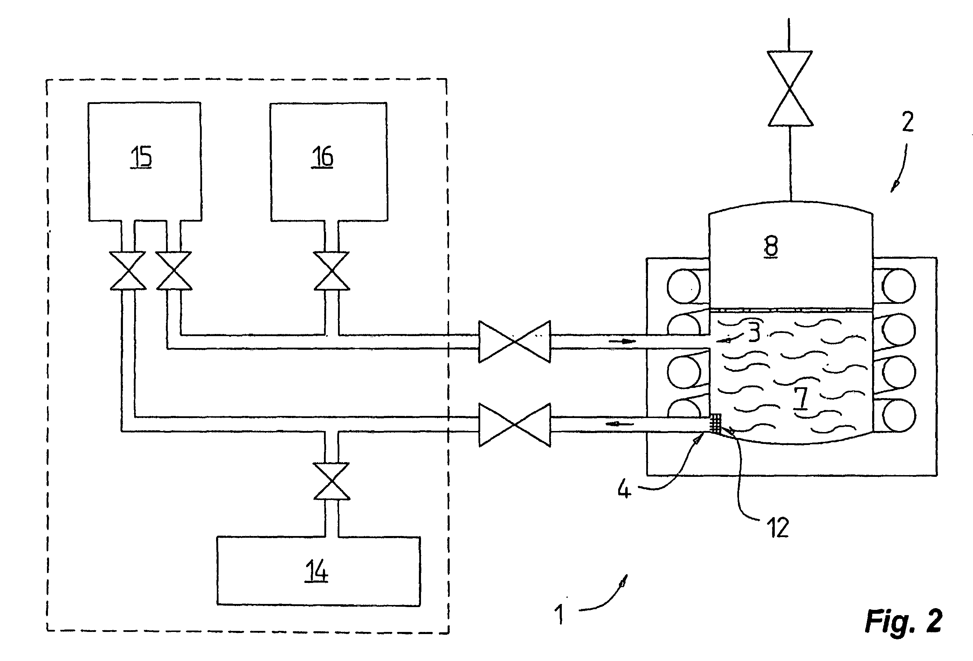

Dem Einlaß 3 und dem Auslaß 4 sind nicht näher dargestellte Anschlußmittel zugeordnet, damit die den Einlaß 3 und den Auslaß 4 bildenden Rohrleitungsstücke an eine Befüllungs- und Entnahmeeinrichtung anschließbar sind. Zu diesem Zweck können die Rohrleitungsstücke im Bereich einer solchen Kupplung konzentrisch zueinander angeordnet sein, so daß ein der Befüllungs- und Entnahmeeinrichtung zugeordnetes Kupplungsstück ebenfalls konzentrisch doppelrohrig aufgebaut sein kann. Die Verbindung der beiden freien Anschlußmittel kann durch einen Bajonettverschluß erfolgen. Eine solche Befüllungs- und Entnahmeeinrichtung 13 ist schematisiert der Figur 2 zu entnehmen, an welche Befüllungs- und Entnahmeeinrichtung 13 der Konverter 1 der Figur 1 angeschlossen ist. Die Befüllungs- und Entnahmeeinrichtung 13 umfaßt einen Entnahmetank 14, einen Kühlmitteltank 15 und einen Bevorratungstank 16, in dem der NH₃-abspaltende Stoff angereichert in einer Trägerflüssigkeit enthalten ist. Die zum Betreiben der Befüllungs- und Entnahmeeinrichtung 13 notwendigen Pumpen sind in der Figur 2 der Übersicht halber nicht dargestellt.

Zum Befüllen des auf Betriebstemperatur befindlichen Konverters 1 wird in einem ersten Schritt durch Verbinden einer der Befüllungs- und Entnahmeeinrichtung 13 zugehörigen Leitungskupplung eine Verbindung mit einem entsprechenden, am Kraftfahrzeug befindlichen Gegenstück hergestellt. An das am Kraftfahrzeug befindliche Gegenstück sind die den Einlaß 3 und den Auslaß 4 darstellenden Rohrstücke angeschlossen. In dem Reaktionsbehälter 2 befindet sich im Zeitpunkt der Herstellung der Leitungsverbindung ein Überdruck, so daß die vorgesehenen Verbindungsmittel entsprechend ausgelegt sind. Unmittelbar nach Erstellen der Leitungsverbindung wird durch den Auslaß 4 des Reaktionsbehälters 2 Trägerflüssigkeit abgezogen. Dieses kann beispielsweise allein durch Öffnen entsprechender Ventile zum Gestatten einer Flüssigkeitsverbindung zwischen dem Reaktionsbehälter 2 und dem Entnahmetank 14 geschehen, wobei durch den im Reaktionsbehälter 2 befindlichen Überdruck ein Ausfließen einer bestimmten Trägerflüssigkeitsmenge selbsttätig erfolgt. Verbliebene NH₃-abspaltende Stoffreste verbleiben in dem Eduktbereich 7 des Reaktionsbehälters 2, da diese durch den Siebkörper 12 herausgefiltert werden. Bei dem in Figur 2 dargestellten Ausführungsbeispiel ist vorgesehen, daß eine Befüllung erst bei abgekühltem Reaktionsbehälter erfolgen soll. Zu diesem Zweck wird nach einem Druckabbau des Reaktionsbehälters 2 ein Kreislauf mit dem Kühlmitteltank 15 hergestellt, so daß der Eduktbereich 7 des Reaktionsbehälters 2 nunmehr mit einem Kühlmittel, welches zweckmäßigerweise der eingesetzten Trägerflüssigkeit entspricht, gespült und abgekühlt wird. Durch das vorgesehene turbulente Einströmen der Kühlflüssigkeit in den Reaktionsbehälter 2 erfolgt eine rasche Abkühlung des Reaktionsbehälters 2. Unmittelbar nach Abkühlen des Reaktionsbehälters 2 erfolgt eine Neubefüllung durch Einbringen einer vorbestimmten Menge des in dem Bevorratungstank 16 enthaltenen NH₃-abspaltenden Stoffes. Dies kann entweder in der in dem Bevorratungstank 16 vorgesehenen Konzentration oder auch mit einer vorbestimmten Kühlflüssigkeitsmenge verdünnt geschehen. Ist die vorbestimmte Menge des NH₃-abspaltenden Stoffes mit dem Trägermedium in den Reaktionsbehälter 2 eingespült worden, ist es zweckmäßig zum Reinigen der eingesetzten Ventile und Anschlußmittel, daß in einem letzten Betankungsschritt alleinig eine bestimmte Menge der Trägerflüssigkeit in den Reaktionsbehälter 2 eingebracht wird. Dadurch werden die Ventile und die Anschlußmittel gespült, so daß in diesen keine NH₃-abspaltenden Stoffreste mehr enthalten sind. Die Ventile werden geschont, da dann in dem zu schaltenden Medium, nämlich alleinig Trägerflüssigkeit kein Feststoff mehr vorhanden ist. Darüber hinaus wird vermieden, daß sich in den der Befüllungs- und Entnahmeeinrichtung 13 zugeordneten Leitungen durch darin befindliche NH₃-abspaltende Stoffreste durch eine Zersetzung dieses Stoffes ein Druck aufbaut, wie dies beispielsweise an heißen Sommertagen möglich wäre.

Eine Betankung des Konverters unter Druck unter Gewährleistung eines Spülens der Anschlußleitungen sowie der Ventile und der Anschlußmittel kann beispielsweise wie folgt vorgenommen werden. In dem Reaktionsbehälter 2 wird ein komprimierbares Volumen angeordnet, daß sich bei Überschreiten eines vorgegebenen Druckes zusammendrückt. Der Reaktionsbehälter 2 kann beispielsweise mit einem Druck von 5 bar befüllt werden. Der Befüllungsvorgang wird gestoppt, wenn bei diesem Druck kein Transportmedium mehr transportiert wird. Es erfolgt dann eine Umschaltung von dem NH₃-abspaltenden Stoff transportierenden Trägermedium auf das reine Trägermedium der Druck wird auf 8 bar erhöht, so daß das im Reaktionsbehälter 2 angeordnete Volumen komprimiert wird und dadurch zusätzlicher NH₃-abspaltender Stoff aus den Rohrleitungen in den Reaktionsbehälter 2 eingebracht wird. Dadurch werden die Zuleitung, die Ventile und die Anschlußmittel gespült, so daß in diesen keine NH₃abspaltende Stoffreste mehr vorhanden sind.

Nach einer solchen Neubefüllung des Konverters 1 wird die Leitungsverbindung getrennt und der Konverter 1 kann erneut seine Betriebstemperatur aufnehmen.

Für den geschilderten Betankungsvorgang wird nur soviel Zeit benötigt, die eine Betankung eines Kraftfahrzeuges in Anspruch nimmt.

Als NH₃-abspaltender Stoff kann jeder Stoff oder jedes Stoffgemisch eingesetzt werden, welches bei relativ niedrigen Temperaturen NH₃ abgibt. Bevorzugt wird als NH₃-abspaltender Stoff Ammoniumcarbamat eingesetzt.

### Zusammenstellung der Bezugszeichen

- 1: Konverter
- 2: Reaktionsbehälter
- 3: Einlaß
- 4: Auslaß
- 5: Auslaß
- 6: Membran
- 7: Eduktbereich
- 8: Produktbereich
- 9: Druckreduzierventil
- 10: Heizeinrichtung
- 11: Wärmeschlange
- 12: Siebkörper
- 13: Befüllungs- und Entnahmeeinrichtung
- 14: Entnahmetank
- 15: Kühlmitteltank
- 16: Bevorratungstank

## Patentansprüche

1. Verfahren zum Befüllen eines auf Betriebstemperatur befindlichen, einen NH₃-abspaltenden Stoff enthaltenden Konverters (1) für eine Vorrichtung zum Zuführen von NH₃ in den Abgasstrom eines Ver brennungmotors bestehend aus einem druckfesten, den NH₃abspaltenden Stoff enthaltenden Reaktionsbehälter (2), einer Heizeinrichtung (10) zum Erwärmen des Reaktionsbehälterses (2) auf Betriebstemperatur und Mitteln (5, 9) zum Zuführen des abgespaltenen NH₃ in den Abgasstrom des Verbrennungsmotors umfassend folgende Schritte:
- Anschließen des Reaktionsbehälters (2) an eine Befüllungs- und Entnahmeeinrichtung (13), wobei das Innere des Reaktionsbehälters über einen Einlaß (3) und über einen Auslaß (4) mit der Befüllungs- und Entnahmeeinrichtung (13) in Verbindung gebracht wird,
- Befüllen des Reaktionsbehälters (2) mit neuem NH₃abspaltendem Stoff unter Einsatz eines flüssigen oder gasförmigen, den NH₃-abspaltenden Stoff transportierenden, das von dem NH₃-abspaltenden Stoff abgespaltene NH₃ weder lösenden noch chemisch bindenden Trägermediums, das durch den Einlaß (3) in den Reaktionsbehälter (2) bei gleichzeitigem Abziehen einer Trägermediummenge durch den Auslaß (4) nach einem Abtrennen des NH₃-abspaltenden Stoffes von der abzuziehenden Trägermediummenge eingebracht wird, und
- Trennen des Reaktionsbehälters (2) nach einem Befüllen des Reaktionsbehälters (2) von der Befüllungs- und Entnahmeeinrichtung (13).

2. Verfahren nach Anspruch 1, **dadurch gekennzeichnet, daß** vor dem Schritt des Befüllens des Reaktionsbehälters (2) der Reaktionsbehälter (2) dadurch gekühlt wird, daß ein Kühlmedium unter Ausbildung von Strömungsturbulenzen durch den Einlaß (3) in das Innere des Reaktionsbehälters (2) eingebracht und durch den von dem Einlaß (3) beabstandeten Auslaß (4) aus dem Reaktionsbehälter (2) abgezogen wird und dieser Prozeß solange fortgesetzt wird, bis die gewünschte Abkühlungstemperatur erreicht ist.

3. Verfahren nach Anspruch 1 oder 2, **dadurch gekennzeichnet, daß** durch das Trägermedium weitere, bei der NH₃-Abspaltung entstehenden Abspaltungsprodukte des NH₃-abspaltenden Stoffes gebunden werden.

4. Verfahren nach einem der Ansprüche 1 bis 3, **dadurch gekennzeichnet, daß** als Trägermedium eine Flüssigkeit eingesetzt wird, wobei eine vorbestimmte Flüssigkeitsmenge auch beim Betrieb des Konverters (1) in dem Reaktionsbehälter (2) verbleibt.

5. Verfahren nach einem der Ansprüche 1 bis 3, **dadurch gekennzeichnet, daß** in einem letzten Befüllungsschritt des Reaktionsbehälters (2) über die Zuleitungen eine bestimmte Menge des reinen Trägermediums eingebracht wird.

6. Konverter für eine Vorrichtung zum Zuführen von Ammoniak (NH₃) in den Abgasstrom eines Verbrennungsmotors bestehend aus einem druckfesten Reaktionsbehälter (2) zum Erzeugen von NH₃ durch Erwärmen eines unter Wärmezufuhr NH₃-abspaltenden Stoffes und einer Heizeinrichtung (10) zum Erwärmen des Reaktionsbehälters (2) auf Betriebstemperatur zum Erzeugen des NH₃, **dadurch gekennzeichnet, daß** der Reaktionsbehälter (2) einen mit Anschlußmitteln versehenen Auslaß (4) und einen von dem Auslaß (4) beabstandeten, ebenfalls mit Anschlußmitteln versehenen Einlaß (3) aufweist, mit welchen Anschlußmitteln das Innere des Reaktionsbehälters (2) zum Abziehen eines in dem Reaktionsbehälter (2) befindlichen Trägermediums und zum Befüllen des Reaktionsbehälters (2) mit neuem, durch das Trägermedium transportierten NH₃-abspaltendem Stoff an eine Befüllungs- und Entnahmeeinrichtung (13) anschließbar ist.

7. Konverter nach Anspruch 6, **dadurch gekennzeichnet, daß** die Anschlußmittel von Auslaß (4) und Einlaß (3) konzentrisch zueinander angeordnet sind.

8. Konverter nach Anspruch 6 oder 7, **dadurch gekennzeichnet, daß** das dem Auslaß (4) zugeordnete Abschlußmittel über ein mit seiner Hochdruckseite zum Reaktionsbehälter (2) weisendes Druckreduzierventil verfügt.

9. Konverter nach einem der Ansprüche 6 bis 8, **dadurch gekennzeichnet, daß** das Innere des Reaktionsbehälters (2) durch eine NH₃-durchlässige Membran (6) in einen unteren, das Trägermedium mit dem NH₃-abspaltenden Stoff enthaltenden Bereich (7) und einen oberen, das abgespaltene NH₃ enthaltenden Bereich (8) unterteilt ist.

## Claims

1. Method for filling a converter (1), which is at operating temperature and contains an NH₃-releasing substance, for a device for supplying NH₃ to the stream of exhaust gas from a combustion engine, comprising a pressure-resistant reaction vessel (2), which contains the NH₃-releasing substance, a heating device (10) for heating the reaction vessel (2) to operating temperature and means (5,9) for supplying the released NH₃ to the stream of exhaust gas from the combustion engine, said method including the following steps:
- connecting the reaction vessel (2) to a filling and discharge device (13), the interior of the reaction vessel being connected to the filling and discharge device (13) via an inlet (3) and an outlet (4),
- filling the reaction vessel (2) with new NH₃-releasing substance using a liquid or gaseous carrier medium which conveys the NH3-releasing substance, neither detaches nor chemically bonds the NH₃ released by the NH₃-releasing substance and which is introduced through the inlet (3) into the reaction vessel (2) at the same time as an amount of the carrier medium is withdrawn through the outlet (4) after the NH₃-releasing substance has been separated from the amount of carrier medium to be withdrawn, and
- separating the reaction vessel (2) from the filling and discharge device (13) after said vessel (2) has been filled.

2. Method according to claim 1, **characterised in that** before the step of filling the reaction vessel (2), the reaction vessel (2) is cooled **in that** a cooling medium is introduced through the inlet (3) into the interior of the reaction vessel (2), forming flow turbulences, and is withdrawn from the reaction vessel (2) through the outlet (4), which is spaced apart from the inlet (3), and this process is continued until the desired cooling temperature is reached.

3. Method according to claim 1 or 2, **characterised in that** additional separation products of the NH₃-releasing substance are bound by the carrier medium.

4. Method according to one of claims 1 to 3, **characterised in that** a liquid is used as the carrier medium, a predetermined amount of liquid also remaining in the reaction vessel (2) during the operation of the converter (1).

5. Method according to one of claims 1 to 3, **characterised in that**, in a last step of filling the reaction vessel (2), a specific amount of the pure carrier medium is introduced via the supply lines.

6. Converter for a device for supplying ammonia (NH₃) to the stream of exhaust gas from a combustion engine, comprising a pressure-resistant reaction vessel (2) for generating NH₃ by heating a substance which releases NH₃ when heat is supplied, and a heating device (10) for heating the reaction vessel (2) to operating temperature in order to generate the NH₃, **characterised in that** the reaction vessel (2) has an outlet (4) provided with connection means and an inlet (3), also provided with connection means and spaced apart from the outlet (4), the interior of the reaction vessel (2) being able to be connected to a filling and discharge device (13) using these connection means, to withdraw a carrier medium located in the reaction vessel (2) and to fill the reaction vessel (2) with new NH₃-releasing substance conveyed by the carrier medium.

7. Converter according to claim 6, **characterised in that** the connection means of outlet (4) and inlet (3) are arranged concentrically with respect to each other.

8. Converter according to claim 6 or 7, **characterised in that** the closing means associated with the outlet (4) has a pressure reducing valve which points with its high-pressure side towards the reaction vessel (2).

9. Converter according to one of claims 6 to 8, **characterised in that** the interior of the reaction vessel (2) is subdivided by an NH₃-permeable membrane (6) into a lower region (7) containing the carrier medium with the NH₃-releasing substance and an upper region (8) containing the released NH₃.

## Revendications

1. Procédé de remplissage d'un convertisseur (1) se trouvant à une température de service et contenant une matière dégageant du NH₃, applicable à un dispositif d'amenée du NH₃ dans le flux des gaz d'échappement d'un moteur à combustion constitué d'une cuve à réaction (2) résistante à la pression contenant une matière dégageant du NH₃, d'un dispositif de chauffage (10) pour réchauffer la cuve à réaction (2) et l'amener à sa température de service, et des moyens (5, 9) pour amener le NH₃ qui s'est dégagé dans le flux des gaz d'échappement d'un moteur à combustion selon les étapes suivantes:
- Raccordement d'une cuve à réaction (2) à un dispositif de remplissage et de prélèvement (13), l'intérieur de la cuve à réaction étant relié par une entrée (3) et par une sortie (4) avec le dispositif de remplissage et de prélèvement (13),
- Remplissage de la cuve à réaction (2) avec de la matière neuve dégageant du NH₃ en ayant recours à un médium porteur sous forme liquide ou gazeuse, transportant la matière dégageant du NH₃, sans diluer ni lier chimiquement le NH₃ provenant de la matière dégageant du NH₃, lequel est introduit par l'entrée (3) dans la cuve à réaction (2) en prélevant dans le même temps une quantité de médium porteur par la sortie (4), après une séparation de la matière dégageant du NH₃ de la quantité de médium porteur à prélever et,
- Séparation de la cuve à réaction (2), après un remplissage de la cuve à réaction (2), du dispositif de remplissage et de prélèvement (13).

2. Procédé selon la revendication 1, **caractérisé en ce que** la cuve à réaction (2) est refroidie, avant l'étape de remplissage de la cuve à réaction (2), en introduisant par l'entrée (3) à l'intérieur de la cuve à réaction (2), un médium de refroidissement tout en créant des courants turbulents et en effectuant un prélèvement dans la cuve à réaction (2) par la sortie (4), située à distance de l'entrée (3), et **en ce que** ce processus est poursuivi jusqu'à atteindre la température de refroidissement voulue.

3. Procédé selon la revendication 1 ou 2, **caractérisé en ce que** le médium porteur lie d'autres produits de décomposition de la matière dégageant du NH₃ se formant lors du dégagement de NH₃.

4. Procédé selon l'une des revendications 1 à 3, **caractérisé en ce que** l'on utilise en guise de médium porteur un liquide, une quantité de liquide préalablement déterminée restant dans la cuve à réaction (2) même lors du fonctionnement du convertisseur (1).

5. Procédé selon l'une des revendications 1 à 3 **caractérisé en ce que** l'on introduit par les conduites, au cours d'une dernière étape de remplissage de la cuve à réaction (2), une certaine quantité de médium porteur pur.

6. Convertisseur pour un dispositif d'amenée d'ammoniac (NH₃) dans le flux des gaz d'échappement d'un moteur à combustion, constitué d'une cuve à réaction (2) résistante à la pression afin de produire du NH₃, en réchauffant une matière dégageant du NH₃ sous l'influence de la chaleur et d'un dispositif de chauffage (10) pour réchauffer la cuve à réaction (2) jusqu'à atteindre la température de service nécessaire à la production de NH₃ **caractérisé en ce que** la cuve à réaction (2) présente une sortie (4) munie de moyens de raccordement ainsi qu'une entrée (3), également munie de moyens de raccordement et située à distance de la sortie (4), les moyens de raccordement permettant de raccorder l'intérieur de la cuve à réaction (2) à un dispositif de remplissage et de prélèvement (13) afin de prélever un médium porteur se trouvant dans la cuve à réaction (2) et de remplir la cuve à réaction (2) avec de la matière neuve, non utilisée, dégageant du NH₃, transportée par le médium porteur.

7. Convertisseur selon la revendication 6 **caractérisé en ce que** les moyens de raccordement de la sortie (4) et de l'entrée (3) sont disposés concentriquement l'un par rapport à l'autre.

8. Convertisseur selon la revendication 6 ou 7 **caractérisé en ce que** le moyen de raccordement affecté à la sortie (4) dispose d'un clapet de réduction de la pression orienté, par sa face haute pression, vers la cuve à réaction (2).

9. Convertisseur selon l'une des revendications 6 à 8 **caractérisé en ce que** l'intérieur de la cuve à réaction (2) est subdivisé par une membrane (6) perméable au NH₃ en une zone (7) inférieure, contenant le médium porteur avec la matière dégageant du NH₃, et une zone (8) supérieure, contenant le NH₃ qui s'est dégagé.
